# EUROPEAN PATENT SPECIFICATION

(11) **EP 4 480 790 B1**
(45) Date of publication and mention of the grant of the patent: **14.01.2026**
(21) Application number: 24179454.4
(22) Date of filing: 03.06.2024
(51) Int. Cl.: B62D 25/08, B60R 5/02, B60R 7/06

(54) **VEHICLE FRONT PART STRUCTURE**
FAHRZEUGVORDERTEILSTRUKTUR
STRUCTURE DE PARTIE AVANT DE VÉHICULE

(30) Priority: 22.06.2023 JP 2023102459
(43) Date of publication of application: 25.12.2024
(73) Proprietor: MAZDA MOTOR CORPORATION, Hiroshima 730-8670 (JP)
(72) Inventor: Furutani, Keisuke, Hiroshima, 730-8670 (JP); Ishizuka, Kozo, Hiroshima, 730-8670 (JP); Fujii, Hideaki, Hiroshima, 730-8670 (JP); Hiraiwa, Ai, Hiroshima, 730-8670 (JP); Misaki, Muguruma, Hiroshima, 730-8670 (JP)
(74) Representative: Lorenz Seidler Gossel Part. mbB

(56) References cited:
- US-A- 4 109 955
- US-A1- 2022 355 738
- US-B2- 11 618 388

## Description

### [Technical Field]

The present invention relates to a vehicle front part structure.

### [Background Art]

Patent Literature 1 discloses a vehicle provided with a trunk at a front part. The trunk disclosed in Patent Literature 1 is formed of a resin material and arranged below a bonnet at the vehicle front part. A user can open the bonnet and take a package into and out of the trunk.

Patent Literature 2 disclose a further example **of** a vehicle provided with a trunk at a front part, according to the preamble of claim 1.

### [Citation List]

### [Patent Literature]

[Patent Literature 1] German Patent Application Publication No. 102020106560
[Patent Literature 2] US Patent Application Publication No. US 2022/355738 A1

### [Summary of Invention]

### [Problem to be Solved by the Invention]

However, the trunk disclosed in Patent Literature 1 described above needs improvement in terms of user convenience because stopping the vehicle and opening the bonnet is necessary every time accessing the trunk.

The present invention has been made in view of the problem as described above and aims to improve user convenience of a vehicle front part structure including a front trunk.

### [Means for Solving the Problem]

A vehicle front part structure according to an aspect of the present invention includes a front trunk, a vehicle cabin side housing portion, and a communication portion. The front trunk is disposed at a vehicle front part on a front side of a vehicle cabin of a vehicle and includes a front housing space that can house a package. The vehicle cabin side housing portion is disposed at a front part of the vehicle cabin, comprises a vehicle cabin side housing space into and out of which a package can be taken from the vehicle cabin side, and is provided with a lid that can open and close an opening of the vehicle cabin side housing space on the vehicle cabin side. The communication portion has a communication space providing communication between the front housing space and the vehicle cabin side housing space.

In the vehicle front part structure according to the above-described aspect, since the front housing space of the front trunk and the vehicle cabin side housing space of the vehicle cabin side housing portion communicate with each other through the communication portion, a package can be housed in the front trunk from the vehicle cabin side as well. Accordingly, an occupant can house a package in the front trunk without getting off the vehicle, and high convenience can be achieved.

In the vehicle front part structure according to the above-described aspect, since the vehicle cabin side housing portion provided with the lid is a communication counterpart with the front trunk, smell leakage from the front trunk toward the vehicle cabin and package slippage to the vehicle cabin side can be prevented.

In the vehicle front part structure according to the above-described aspect, at least part of an inner bottom surface of the front trunk may be tilted such that its height gradually decreases toward a front side in a front-rear direction of the vehicle.

In the vehicle front part structure according to the above-described aspect, at least part of an inner bottom surface of the communication portion may be tilted such that its height gradually decreases toward a front side in a front-rear direction of the vehicle.

In the vehicle front part structure according to the above-described aspect, since at least part of the inner bottom surface of the front trunk and/or the inner bottom surface of the communication portion is tilted to decrease toward the front side, a package housed from the vehicle cabin side housing portion to the communication portion can easily move to the front trunk.

In the vehicle front part structure according to the above-described aspect, at least part of an inner bottom surface of the communication portion may be tilted such that its height gradually increases toward a front side in a front-rear direction of the vehicle.

Note that in a case where only part of the above-described inner bottom surfaces is provided with an inner bottom surface that is tilted, a bifurcation point between the tilted part and a non-tilted part is a trigger place that causes breaking and bending when an impact load is applied from the front side.
Specifically, a corner is formed between the part where the inner bottom surface is tilted and the part where the inner bottom surface is not tilted, and accordingly, this place breaks and bends with an impact load. Thus, wall portions of the front trunk and the communication portion can be prevented from entering the vehicle cabin at front collision.

In the vehicle front part structure according to the above-described aspect, a front part region positioned at a front part in a region from a front end part of an inner bottom surface of the front trunk to a rear end portion of an inner bottom surface of the communication portion may be tilted such that its height gradually decreases toward the front end portion of the inner bottom surface of the front trunk. Moreover, in the vehicle front part structure according to the above-described aspect, a rest region except for the front part region in the region from the front end portion of the inner bottom surface of the front trunk to the rear end portion of the inner bottom surface of the communication portion may be tilted such that its height gradually decreases toward the rear end portion of the inner bottom surface of the communication portion.

In the vehicle front part structure according to the above-described aspect, since the above-described front part region is formed at a downward tilt toward the front end portion side and the above-described rest region is formed at a downward tilt toward the rear end portion side, a package transferred to the front side of a bifurcation point between the front part region and the rest region can be easily transferred to the front trunk.

Moreover, in the vehicle front part structure according to the above-described aspect, when a package is placed on the rear side of the bifurcation point between the front part region and the rest region, the package can be easily taken out from the vehicle cabin side.

Further, in the vehicle front part structure according to the above-described aspect, a corner is formed between the inner bottom surfaces at the bifurcation point between the front part region and the rest region. Thus, in the above-described aspect as well, similarly to the above description, the wall portions of the front trunk and the communication portion can be prevented from entering the vehicle cabin at front collision.

In the vehicle front part structure according to the above-described aspect, at least part, including a front side part, of an inner bottom surface of the vehicle cabin side housing portion may be tilted such that its height gradually decreases toward a rear side in a front-rear direction of the vehicle.

In the vehicle front part structure according to the above-described aspect, since the inner bottom surface of the vehicle cabin side housing portion is tilted such that height decreases toward the rear side (vehicle cabin side), a package to be kept in the vehicle cabin side housing portion can be prevented from moving from the communication portion to the front trunk.

In the vehicle front part structure according to the above-described aspect, the inner bottom surface of the communication portion may be tilted such that its height gradually increases from the rear side to the front side of the front trunk in a front-rear direction of the vehicle and/or the inner bottom surface of the front trunk may be tilted such that its height decreases further on the front side of the vehicle, so that the inner bottom surface of the front trunk and the inner bottom surface of the communication portion are angled relative to each other at their contact place.

In an embodiment of the vehicle front part structure according to the above-described aspect, it is possible to prevent a situation in which the communication portion moves to the rear side and enters the vehicle cabin due to the impact force in the rear direction in case of collision.

In the vehicle front part structure according to the above-described aspect, part of a wall portion surrounding the front housing space of the front trunk and a wall portion surrounding the communication space of the communication portion may include a fragile portion formed weaker than other part.

In the vehicle front part structure according to the above-described aspect, the fragile portion may be provided by thin-walled portions at a bottom wall, a sidewall, and an upper wall of the communication portion, wherein preferably the fragile portion constituted by the thin-walled portions has lower stiffness than the other parts of the communication portion.

In the vehicle front part structure according to the above-described aspect, since part of the wall portion of the front trunk and the wall portion of the communication portion is formed with the fragile portion, impact force can be absorbed when the impact force is received from the front side at front collision, and the wall portions of the front trunk and the communication portion can be prevented from entering the vehicle cabin. Specifically, at front collision, deformation and damage of the front trunk and the communication portion are triggered by the fragile portion provided at the wall portion, and accordingly, impact force can be absorbed and the wall portions of the front trunk and the communication portion can be prevented from entering the vehicle cabin.

Note that the fragile portion can be formed by, for example, providing a cutout part at a wall portion or employing a structure in which the wall portions are butted with an angle (without being flush).

In the vehicle front part structure according to the above-described aspect, the front trunk may have an opening through which a package can be taken in and out and may be provided with a lid that can open and close the opening.

In the vehicle front part structure according to the above-described aspect, since the front trunk is provided with the lid, it is possible to prevent a package in the front housing space from jumping out due to, for example, vibration during traveling and prevent dust, rainwater, and the like from entering the front housing space.

In the vehicle front part structure according to the above-described aspect, a rear wall of a wall portion surrounding the front housing space of the front trunk may be tilted to gradually lean from the upper side of the rear wall to the lower side of the rear wall in such a manner that the lower side is closer to the rear side in a front rear direction of the vehicle.

In the vehicle front part structure according to the above-described aspect, since the rear wall of the front trunk is tilted to lean in such a manner that its lower part is closer to the rear side, it is easy to visually recognize and access an accessory or the like even when the accessory is disposed on the rear side of the front trunk.

In the vehicle front part structure according to the above-described aspect, an inner bottom surface of the communication portion may be provided with a plurality of protruding portions protruding upward as compared to the other part of the inner bottom surface.

In the vehicle front part structure according to the above-described aspect, the plurality of protruding portions may be formed to extend in the front-rear direction of the vehicle and may be preferably separated from each other in the right-left direction of the vehicle.

In the vehicle front part structure according to the above-described aspect, since the inner bottom surface of the communication portion is provided with the plurality of protruding portions, sliding friction can be reduced when a package is moved on the inner bottom surface of the communication portion. Thus, in the vehicle front part structure according to the above-described aspect, a package can be smoothly moved to the front trunk through the communication portion.

Moreover, although dust, water, and the like enter the communication portion in some cases, which communicates with the front trunk, the dust and the like are unlikely to be accumulated on the protruding portions. Thus, it is possible to prevent dust, water, and the like from adhering to a package moving in the communication portion.

In an embodiment of the vehicle front part structure according to the above-described aspect, an overlay member may be placed on the inner bottom surface of the communication portion, wherein the overlay member is provided with a plurality of protruding portions on an upper surface as compared to the other part of the inner bottom surface.

In an embodiment of the vehicle front part structure according to the above-described aspect, since the plurality of threads of protruding portions are provided on the upper surface of the overlay member placed on the inner bottom surface of the communication portion, sliding friction can be reduced when a package moves in the front-rear direction in the communication space of the communication portion. Thus, the package can be smoothly moved to the front trunk through the communication portion.

Moreover, although dust, water, and the like enter the communication space of the communication portion in some cases, it is possible to prevent the dust, water, and the like from adhering to a package moving through the communication space since the overlay member provided with the plurality of threads of protruding portions is placed on the inner bottom surface of the communication portion.

In the vehicle front part structure according to the above-described aspect, the vehicle cabin side housing space may be a glove box provided at an instrument panel.

In the vehicle front part structure according to the above-described aspect, since an existing glove box is used as the vehicle cabin side housing portion, a new housing portion does not need to be provided. Moreover, since the glove box is originally provided with a lid, no additional lid needs to be attached to an opening of the housing portion. Thus, in a case where the vehicle front part structure according to the above-described aspect is employed, a communication structure between the vehicle cabin and the front trunk can be formed without significant change of vehicle design.

### [Advantageous Effect of Invention]

With a vehicle front part structure according to each of the above-described aspects, it is possible to improve user convenience.

### [Brief Description of Drawings]

FIG. 1 is a schematic diagram illustrating a vehicle front part structure according to a first embodiment.
FIG. 2 is a cross-sectional view illustrating a line II-II section in FIG. 1.
FIG. 3 is a cross-sectional view illustrating part of a vehicle front part structure according to a second embodiment.
FIG. 4 is a cross-sectional view illustrating part of a vehicle front part structure according to a third embodiment.
FIG. 5 is a cross-sectional view illustrating a deformed state of a front trunk and a communication portion at vehicle front collision.
FIG. 6 is a cross-sectional view illustrating part of a vehicle front part structure according to a fourth embodiment.
FIG. 7 is a cross-sectional view illustrating part of a vehicle front part structure according to a fifth embodiment.
FIG. 8 is a perspective view illustrating part of a vehicle front part structure according to a sixth embodiment.
FIG. 9 is a perspective view illustrating part of a vehicle front part structure according to a seventh embodiment.
FIG. 10 is a perspective view illustrating part of a vehicle front part structure according to an eighth embodiment.
FIG. 11 is a cross-sectional view illustrating part of a vehicle front part structure according to a ninth embodiment.
FIG. 12 is a cross-sectional view illustrating part of a vehicle front part structure according to a tenth embodiment.

### [Mode for Carrying Out the Invention]

Embodiments of the present invention will be described below with reference to drawings. Note that the embodiments described below are examples of the present invention, and the present invention is not limited to the embodiments described below except for its essential configuration.

### [First Embodiment]

### 1. Overview of Front Part Structure of Vehicle 1

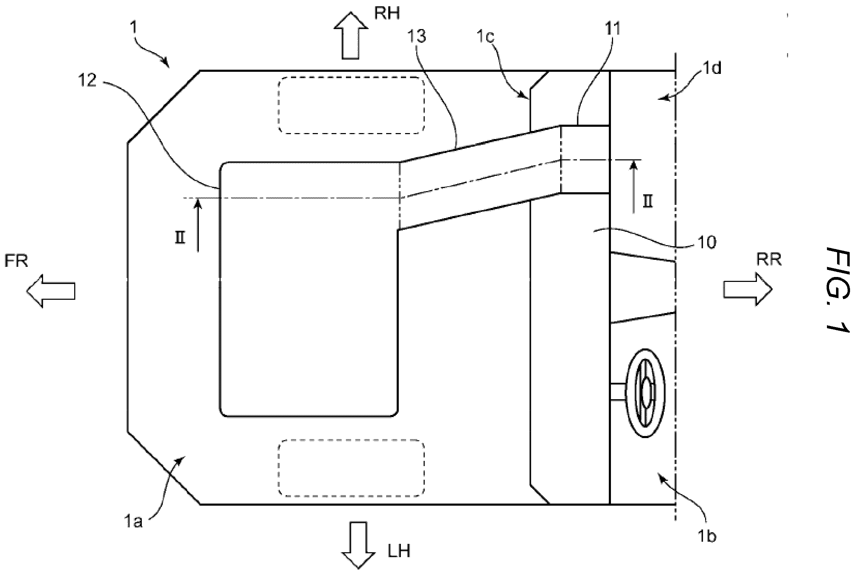

An overview of a front part structure of a vehicle 1 according to a first embodiment will be described below with reference to FIG. **1****.**

As illustrated in FIG. 1, the vehicle 1 according to the present embodiment includes a front trunk 12 at a front part 1a on the front side of a dash panel 1c. The front trunk 12 is disposed below a bonnet and has a space that can house a package.

The vehicle 1 includes an instrument panel 10 in a vehicle cabin 1b on the rear side of the dash panel 1c. The instrument panel 10 is disposed at a front side part of the vehicle cabin 1b and extends in the right-left direction. The instrument panel 10 is provided with a glove box 11 at a part on the front side of a front passenger seat side part 1d.

The glove box 11 has a configuration with which a package can be taken in and out from the vehicle cabin 1b side. The glove box 11 of the present embodiment corresponds to a vehicle cabin side housing portion.

The vehicle 1 further includes a communication portion 13 connecting the front trunk 12 and the glove box 11. In other words, in the vehicle 1 according to the present embodiment, a housing space of the front trunk 12 and a housing space of the glove box 11 communicate with each other through the communication portion 13.

### 2. Configuration of Connection of Front Trunk 12 and Glove Box 11 to Communication Portion 13

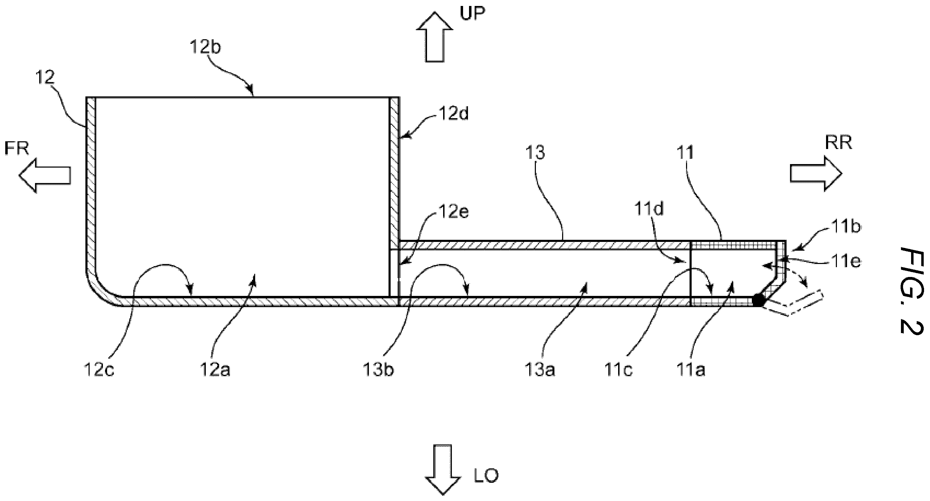

The configuration of connection of the front trunk 12 and the glove box 11 to the communication portion 13 will be described below with reference to FIG. 2.

As illustrated in FIG. 2, the front trunk 12 has an opening 12b on the upper side and has a rear opening 12e on the lower side of a rear wall 12d. A package can be taken into and out of a housing space 12a of the front trunk 12 through the opening 12b.

Note that, in the present embodiment, an inner bottom surface 12c of the front trunk 12 has a configuration as a substantially horizontal plane. Since the inner bottom surface 12c has a configuration as a horizontal plane, a package placed on the inner bottom surface 12c is unlikely to move to front, rear, right, and left.

The glove box 11 has a front opening 11d on the front side and has a rear opening 11e on the rear side. The rear opening 11e can be opened and closed by a lid 11b. A housing space 11a of the glove box 11 is formed between the front opening 11d and the rear opening 11e in the front-rear direction of the vehicle 1. An inner bottom surface 11a of the glove box 11 has a configuration as a substantially horizontal plane.

The communication portion 13 has a communication space 13a extending in the front-rear direction and has a configuration that its circumference is covered by a wall portion. The communication space 13a of the communication portion 13 is connected through the rear opening 12e to the housing space 12a of the front trunk 12 on the front side and connected through the front opening 11d to the housing space 11a of the glove box 11 on the rear side. An inner bottom surface 13b of the communication portion 13 has a configuration as a substantially horizontal plane and has a configuration connected to each of the inner bottom surface 12c of the front trunk 12 and an inner bottom surface 11c of the glove box 11 without a step.

### 3. Effect

In the front part structure of the vehicle 1 according to the present embodiment, since the housing space 12a of the front trunk 12 and the housing space 11a of the glove box 11 are connected to each other through the communication space 13a of the communication portion 13, a package can be housed in the front trunk 12 from the vehicle cabin 1b side as well. Accordingly, an occupant can take a package into and out of the front trunk 12 without getting off the vehicle 1, and high convenience can be achieved.

Moreover, in the vehicle 1, since the glove box 11 provided with the lid 11b is a communication counterpart with the front trunk 12, smell leakage from the front trunk 12 toward the vehicle cabin 1b and package slippage to the vehicle cabin 1b side can be prevented.

Further, in the vehicle 1, since the glove box 11 is a communication counterpart with the front trunk 12, a new housing portion as a communication counterpart is not provided on the vehicle cabin 1b side.

Furthermore, since the glove box 11 is originally provided with the lid 11b, no additional lid needs to be attached to the opening of the housing portion. Thus, in the vehicle 1, a communication structure between the vehicle cabin 1b and the front trunk 12 can be formed without significant design change.

Accordingly, in the front part structure of the vehicle 1 according to the present embodiment, a package can be housed in the front trunk 12 provided at the front part 1a of the vehicle 1 from inside the vehicle cabin 1b as well.

### [Second Embodiment]

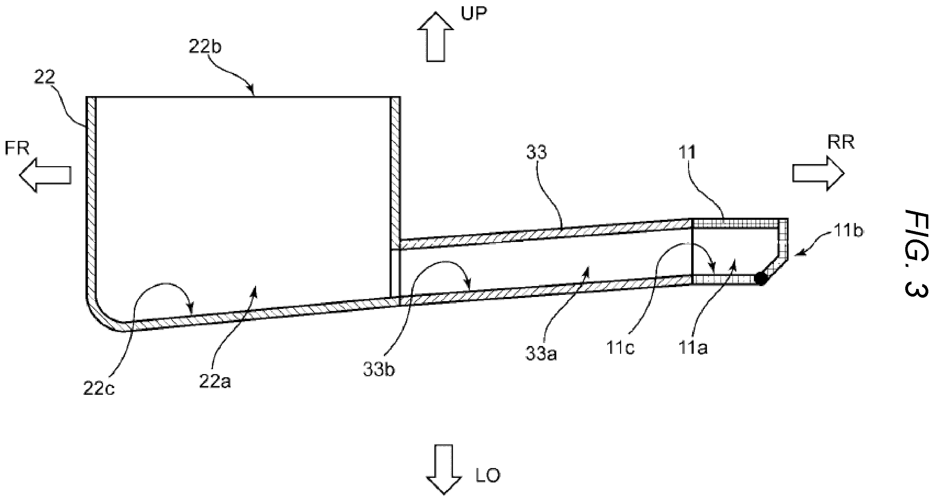

A vehicle front part structure according to a second embodiment will be described below with reference to FIG. 3. FIG. 3 illustrates an extracted part of inside of the vehicle front part structure. A part illustration of which is omitted in FIG. 3 is the same as in the above-described first embodiment. In addition, in FIG. 3, a part having the same configuration as in the above-described first embodiment is denoted by the same reference sign. Duplicate description of a part having the same configuration as in the above-described first embodiment is omitted.

As illustrated in FIG. 3, a vehicle according to the present embodiment includes a front trunk 22, the glove box 11, and a communication portion 33. The front trunk 22 has an opening 22b on the upper side and has a housing space 22a that can house a package. The front trunk 22 of the present embodiment is formed such that an inner bottom surface 22c is tilted. Specifically, the inner bottom surface 22c is tilted such that height gradually decreases from the rear side to the front side of the front trunk 22.

The communication portion 33 has a communication space 33a providing communication between the housing space 22a of the front trunk 22 and the housing space 11a of the glove box 11. An inner bottom surface 33b of the communication portion 33 is tilted such that height gradually decreases from a connection side of the glove box 11 to a connection side of the front trunk 22.

Note that the inner bottom surface 33b of the communication portion 33 has a configuration connected to each of the inner bottom surface 22c of the front trunk 22 and the inner bottom surface 11c of the glove box 11 without a step.

The vehicle front part structure according to the present embodiment has the same configuration as in the above-described first embodiment except that the inner bottom surface 22c of the front trunk 22 and the inner bottom surface 33b of the communication portion 33 are tilted, and thus can achieve the same effect as in the above-described first embodiment.

Moreover, in the vehicle according to the present embodiment, since the inner bottom surface 22c of the front trunk 22 and the inner bottom surface 33b of the communication portion 33 are tilted to gradually decrease toward the front side, a package transferred from the glove box 11 to the communication portion 33 can slide on the inner bottom surface 33b and easily move to the front side of the front trunk **22.**

Note that, in the present embodiment, the entire inner bottom surface 22c of the front trunk 22 and the entire inner bottom surface 33b of the communication portion 33 are tilted, but a package can be easily moved even when the inner bottom surfaces 22c and 33b are partially tilted.

### [Third Embodiment]

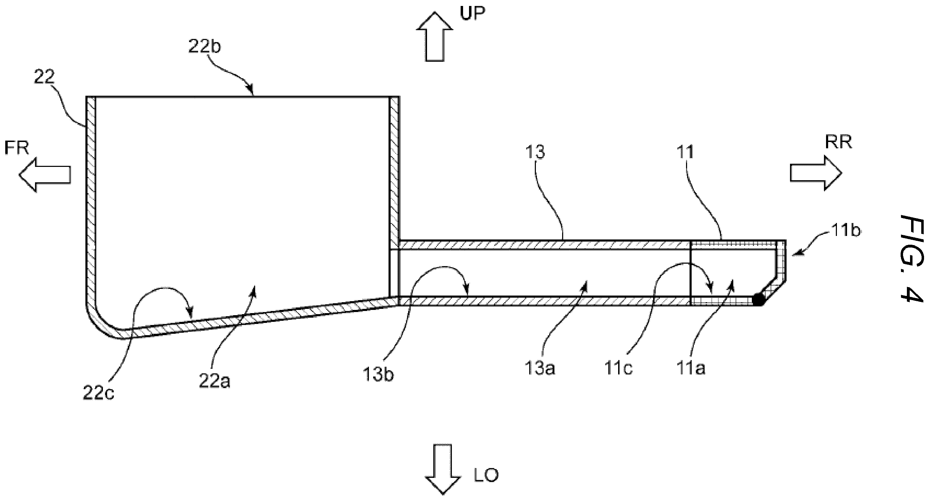

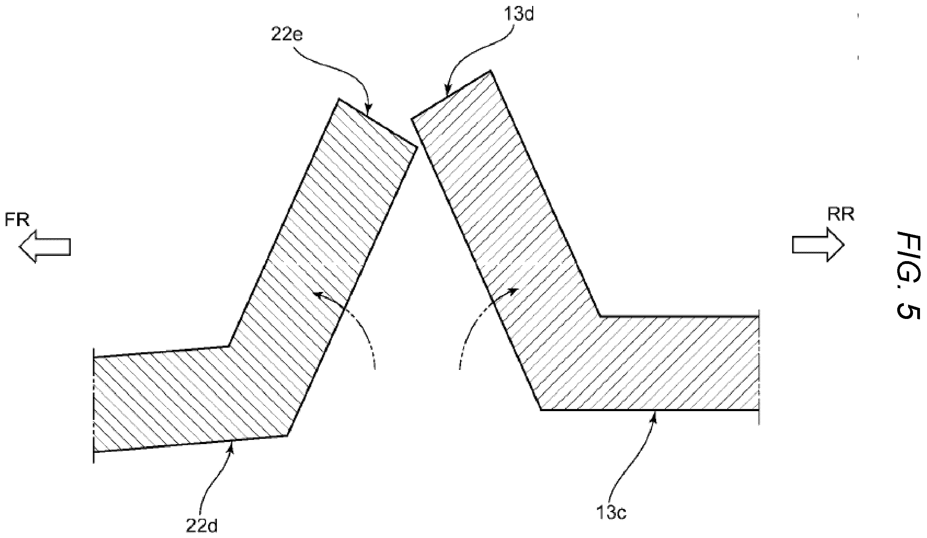

A vehicle front part structure according to a third embodiment will be described below with reference to FIGS. 4 and **5****.** FIG. 4 illustrates an extracted part of inside of the vehicle front part structure. A part illustration of which is omitted in FIG. 4 is the same as in the above-described first embodiment. In addition, in FIG. 4, a part having the same configuration as in the above-described first embodiment and the above-described second embodiment is denoted by the same reference sign.

As illustrated in FIG. 4, as in the above-described second embodiment, the vehicle according to the present embodiment includes the front trunk 22 having the inner bottom surface 22c formed such that height decreases further on the front side. The other configuration is the same as in the above-described first embodiment.

The vehicle front part structure according to the present embodiment has the same configuration as in the above-described first embodiment except that the inner bottom surface 22c of the front trunk 22 is tilted, and thus can achieve the same effect as in the above-described first embodiment.

Moreover, in the vehicle front part structure according to the present embodiment, since the inner bottom surface 22c of the front trunk 22 is tilted as in the above-described second embodiment, a package housed in the front trunk 22 can be prevented from unexpectedly moving to the communication portion 13 due to vibration and the like when the vehicle travels.

In addition, in the present embodiment, since the inner bottom surface 22c of the front trunk 22 is tilted and the inner bottom surface 13b of the communication portion 13 has a configuration as a substantially horizontal plane, a bottom wall of the front trunk 22 and a bottom wall of the communication portion 13 are angled relative to each other at their contact place. Accordingly, as illustrated in FIG. 5, a butted place between a bottom wall 22d of the front trunk 22 and a bottom wall 13c of the communication portion 13 can be a fragile portion having lower stiffness than the other place when impact force in the rear direction is applied to the front trunk 22 at front collision or the like. Specifically, at front collision or the like, the vicinity of the butted place between the bottom wall 22d and 13c is deformed or damaged so that a butted state of an end face 22e of the bottom wall 22d of the front trunk 22 and an end face 13d of the bottom wall 13c of the communication portion 13 is canceled and the end face 22e and the end face 13d face upward. Accordingly, in the vehicle front part structure according to the present embodiment, it is possible to prevent a situation in which the communication portion 13 moves to the rear side and enters the vehicle cabin 1b due to impact force in the rear direction at front collision.

Note that, in the present embodiment, a structure in which the bottom wall 22d of the front trunk 22 and the bottom wall 13c of the communication portion 13 are butted to each other is employed, but the bottom wall of the front trunk 22 may be constituted by a plurality of wall portions butted to each other or the bottom wall of the communication portion 13 may be constituted by a plurality of wall portions butted to each other. In a case where such a configuration is employed, as well, the butted state of butted end portions is canceled as illustrated in **FIG.** 5 at front collision, and accordingly, impact force is absorbed and the wall portions can be prevented from entering the vehicle cabin **1b.**

### [Fourth Embodiment]

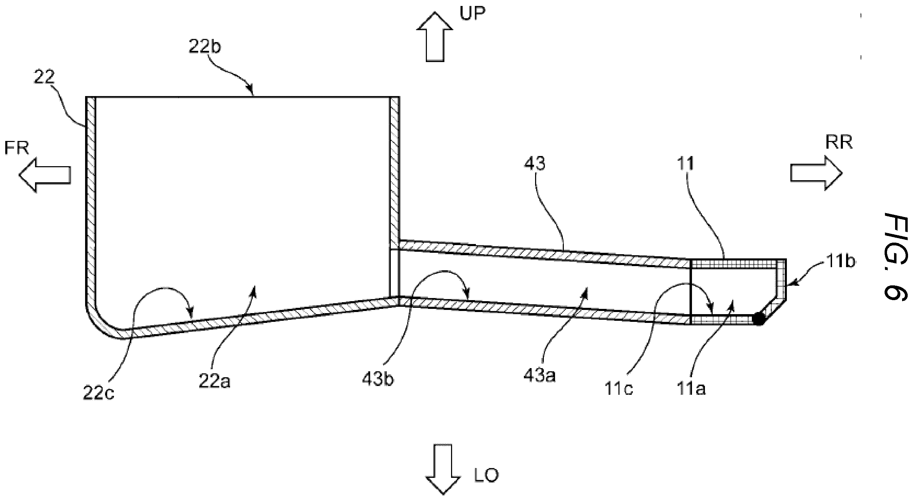

A vehicle front part structure according to a fourth embodiment will be described below with reference to FIG. 6. FIG. 6 illustrates an extracted part of inside of the vehicle front part structure. A part illustration of which is omitted in FIG. 6 is the same as in the above-described first embodiment. In addition, in FIG. 6, a part having the same configuration as in the above-described first to third embodiments is denoted by the same reference sign.

As illustrated in FIG. 6, as in the above-described second embodiment, the vehicle according to the present embodiment includes the front trunk 22 having the inner bottom surface 22c formed such that height decreases further on the front side. In the present embodiment, an inner bottom surface 43b of a communication portion 43 is tilted such that height decreases further on the rear side. Moreover, the housing space 22a of the front trunk 22 and the housing space 11a of the glove box 11 communicate with each other through a communication space 43a of the communication portion 43.

The vehicle front part structure according to the present embodiment has the same configuration as in the above-described second embodiment except that the inner bottom surface 43b of the communication portion 43 is tilted, and thus can achieve the same effect as in the above-described second embodiment.

Moreover, in the present embodiment, since the inner bottom surface 22c of the front trunk 22 is tilted to decrease further on the front side and the inner bottom surface 43b of the communication portion 43 is tilted to decrease further on the rear side, the bottom wall of the front trunk 22 and a bottom wall of the communication portion 43 are angled relative to each other at their contact place. Thus, as described in the above-described third embodiment, a butted place between the bottom wall of the front trunk 22 and the bottom wall of the communication portion 43 can be a weak portion having low stiffness when impact force in the rear direction is applied to the front trunk 22 at front collision or the like, and it is possible to prevent a situation in which the communication portion 43 moves to the rear side and enters the vehicle cabin 1b due to impact force in the rear direction.

In addition, in the vehicle front part structure according to the present embodiment, since the inner bottom surface 22c of the front trunk 22 is formed at a downward tilt toward a front end portion side and the inner bottom surface 43b of the communication portion 43 is formed at a downward tilt toward a rear end portion side, a package transferred to the front side of a bifurcation point between the inner bottom surface 22c and the inner bottom surface 43b can be easily transferred to the front trunk 22. Moreover, when a package is placed in the communication portion 43, the package can be easily taken out from the vehicle cabin 1b side.

Note that, in the present embodiment, a configuration in which the entire inner bottom surface 22c of the front trunk 22 is formed at an upward tilt toward the rear end portion side and the entire inner bottom surface 43b of the communication portion 43 is formed at a downward tilt toward the rear end portion side is employed, but a bifurcation point between the upward tilt and the downward tilt does not necessarily need to coincide with a boundary part between the front trunk 22 and the communication portion 43. For example, the bifurcation point between the upward tilt and the downward tilt may be provided at an intermediate part of the front trunk 22 in the front-rear direction, or the bifurcation point between the upward tilt and the downward tilt may be provided at an intermediate part of the communication portion 43 in the front-rear direction.

### [Fifth Embodiment]

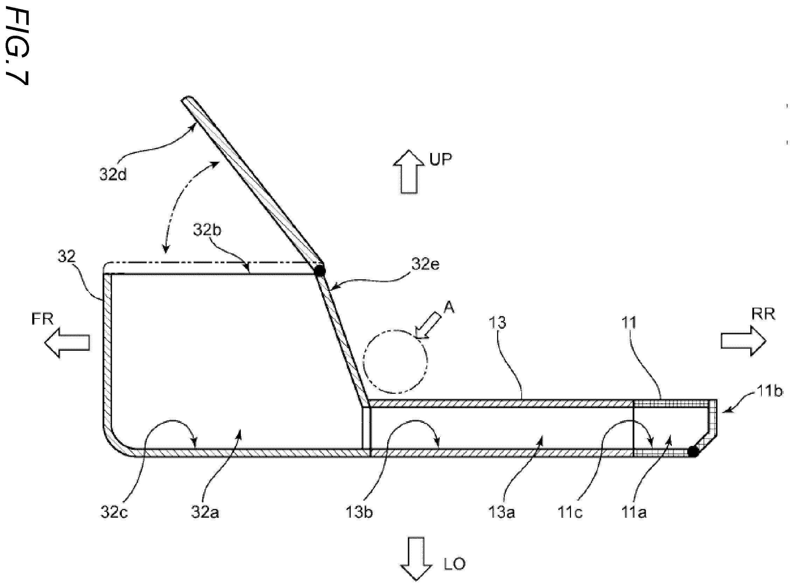

A vehicle front part structure according to a fifth embodiment will be described below with reference to FIG. 7. FIG. 7 illustrates an extracted part of inside of the vehicle front part structure. A part illustration of which is omitted in FIG. 7 is the same as in the above-described first embodiment. In addition, in FIG. 7, a part having the same configuration as in the above-described first embodiment is denoted by the same reference sign.

As illustrated in FIG. 7, the vehicle according to the present embodiment includes a front trunk 32, the glove box 11, and the communication portion 13. The front trunk 32 has an opening 32b on the upper side and has a housing space 32a that can house a package. Note that, in the present embodiment, an inner bottom surface 32c of the front trunk 32 has a configuration as a substantially horizontal plane as in the above-described first embodiment, but may be tilted as in, for example, the above-described second to fourth embodiments.

The front trunk 32 of the present embodiment is provided with a lid 32d that can open and close the opening 32b. A user can open the lid 32d and take a package into and out of the housing space 32a. Note that the lid 32d may be coupled to the bonnet by a wire rope or a string. Accordingly, the user can open the lid 32d of the front trunk 32 only by opening the bonnet, and higher convenience can be achieved.

Moreover, a rear wall 32e of the front trunk 32 of the present embodiment is tilted. Specifically, the rear wall 32e is tilted to gradually lean from the upper side to the lower side in such a manner that the lower side is closer to the rear side.

The vehicle front part structure according to the present embodiment has the same configuration as in the above-described first embodiment except for the configuration of the front trunk 32, and thus can achieve the same effect as in the above-described first embodiment.

Moreover, in the vehicle front part structure according to the present embodiment, since the front trunk 32 is provided with the lid 32d, it is possible to prevent a package from jumping out of the housing section 32a of the front trunk 32 due to vibration or the like during traveling, and prevent dust, rainwater, and the like from entering the housing space 32a.

Further, in the vehicle front part structure according to the present embodiment, since the rear wall 32e of the front trunk 32 is tilted to lean in such a manner that its lower side is closer to the rear side, it is easy to visually recognize and access an accessory or the like even when the accessory is disposed at a rear side part (part illustrated with arrow A) of the front trunk 32.

### [Sixth Embodiment]

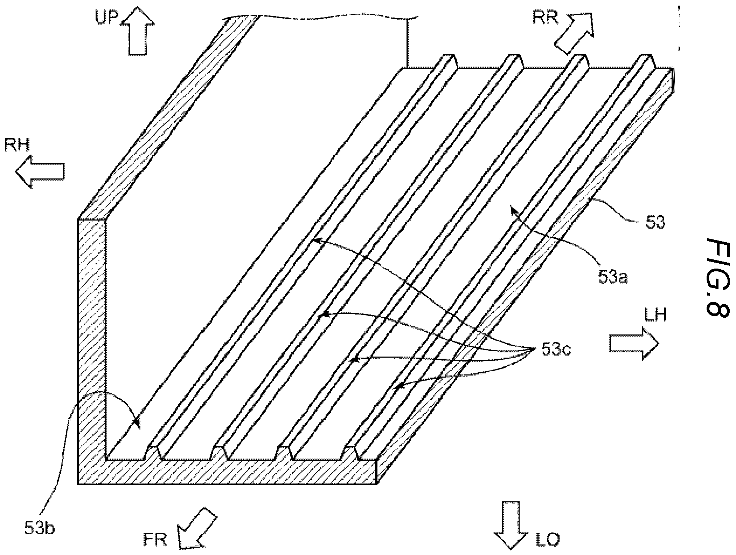

A vehicle front part structure according to a sixth embodiment will be described below with reference to FIG. 8. FIG. 8 illustrates an extracted part of a communication portion 53 in the vehicle front part structure. A part illustration of which is omitted in FIG. 8 is the same as in the above-described first embodiment and other embodiments.

As illustrated in FIG. 8, the communication portion 53 of the present embodiment is provided with a plurality of threads of ridge portions (a plurality of protruding portions) 53c on an inner bottom surface 53b. The plurality of threads of ridge portions 53c are formed to extend in the front-rear direction and separate from each other in the right-left direction.

The vehicle front part structure according to the present embodiment has the same configuration as in the above-described first embodiment except for the structure of the inner bottom surface 53b of the communication portion 53, and thus can achieve the same effect as in the above-described first embodiment.

Moreover, in the vehicle front part structure according to the present embodiment, since the inner bottom surface 53b of the communication portion 53 is provided with the plurality of threads of ridge portions 53c, sliding friction can be reduced when a package is moved on the inner bottom surface 53b of the communication portion 53. Thus, the package can be smoothly moved to the front trunk through the communication portion 53.

Moreover, although dust, water, and the like enter a communication space 53a of the communication portion 53 in some cases, the dust and the like are unlikely to be accumulated on the ridge portions 53c provided as upward protrusions. Thus, it is possible to prevent dust, water, and the like from adhering to a package moving through the communication portion 53.

### [Seventh Embodiment]

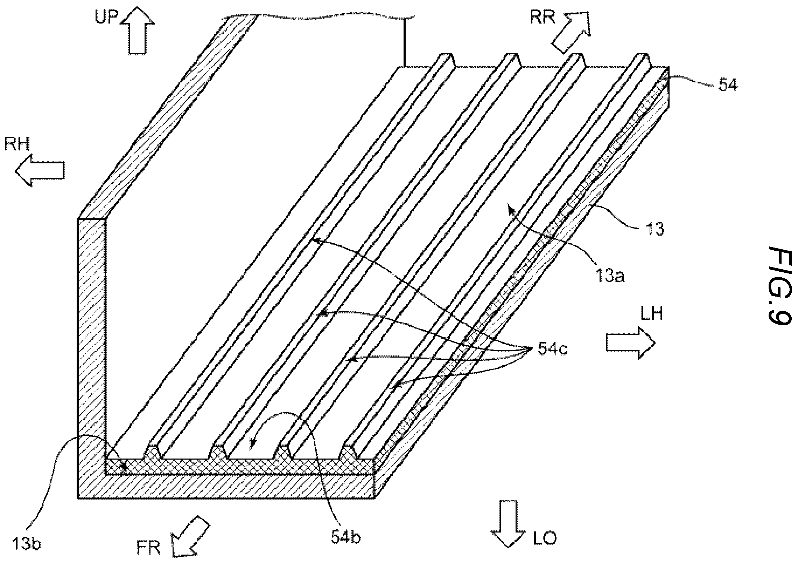

A vehicle front part structure according to a seventh embodiment will be described below with reference to FIG. **9.** FIG. 9 illustrates an extracted part of the communication portion 53 in the vehicle front part structure. A part illustration of which is omitted in FIG. 9 is the same as in the above-described first embodiment and other embodiments.

As illustrated in FIG. 9, an overlay member 54 is placed on the inner bottom surface 13b of the communication portion 13 of the present embodiment. The overlay member 54 is provided with a plurality of threads of ridge portions (a plurality of protruding portions) 54c on an upper surface 54b. Similarly to the ridge portions 53c in the above-described sixth embodiment, the plurality of threads of ridge portions 54c are formed to extend in the front-rear direction and separate from each other in the right-left direction.

The vehicle front part structure according to the present embodiment has the same configuration as in the above-described first embodiment except that the overlay member 54 is placed on the inner bottom surface 13b of the communication portion 13, and thus can achieve the same effect as in the above-described first embodiment.

Moreover, in the vehicle front part structure according to the present embodiment, since the plurality of threads of ridge portions 54c are provided on the upper surface 54b of the overlay member 54 placed on the inner bottom surface 13b of the communication portion 13, sliding friction can be reduced when a package moves in the front-rear direction in the communication space 13a of the communication portion 13. Thus, the package can be smoothly moved to the front trunk through the communication portion 13.

Further, although dust, water, and the like enter the communication space 13a of the communication portion 13 in some cases as described above, it is possible to prevent the dust, water, and the like from adhering to a package moving through the communication space 13a since the overlay member 54 provided with the plurality of threads of ridge portions 54c is placed on the inner bottom surface 13b of the communication portion 13.

### [Eighth Embodiment]

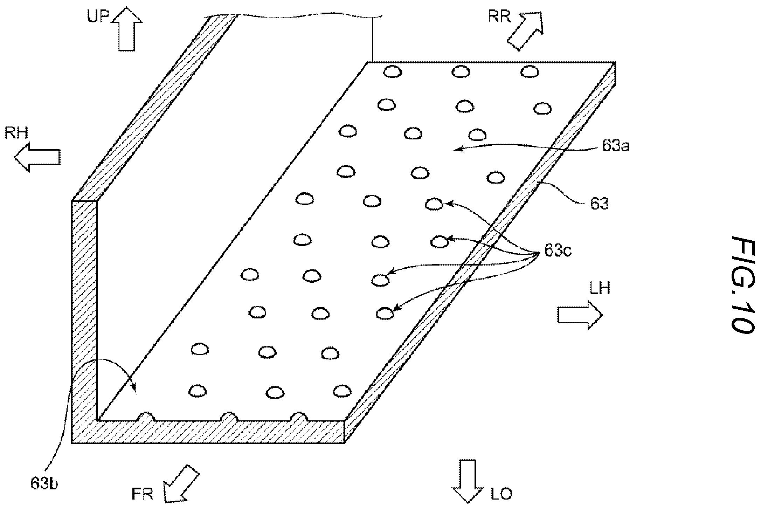

A vehicle front part structure according to an eighth embodiment will be described below with reference to FIG. 10. FIG. 10 illustrates an extracted part of the communication portion 53 in the vehicle front part structure. A part illustration of which is omitted in FIG. 10 is the same as in the above-described first embodiment and other embodiments.

As illustrated in FIG. 10, a communication portion 63 of the present embodiment is provided with a plurality of protruding portions 63c on an inner bottom surface 63b. The plurality of protruding portions 63c each have a semispherical shape and are dispersedly arranged to separate from each other.

The vehicle front part structure according to the present embodiment has the same configuration as in the above-described first embodiment except for the structure of the inner bottom surface 63b of the communication portion 63, and thus can achieve the same effect as in the above-described first embodiment.

Moreover, in the vehicle front part structure according to the present embodiment, since the plurality of protruding portions 63c are provided on the inner bottom surface 63b of the communication portion 63, sliding friction can be reduced when a package is moved on the inner bottom surface 63b of the communication portion 63. Thus, the package can be smoothly moved to the front trunk through the communication portion 63.

Further, although dust, water, and the like enter a communication space 63a of the communication portion 63 in some cases, the dust and the like are unlikely to be accumulated on the protruding portions 63c provided as upward protrusions. Thus, it is possible to prevent the dust, water, and the like from adhering to a package moving through the communication portion 63.

### [Ninth Embodiment]

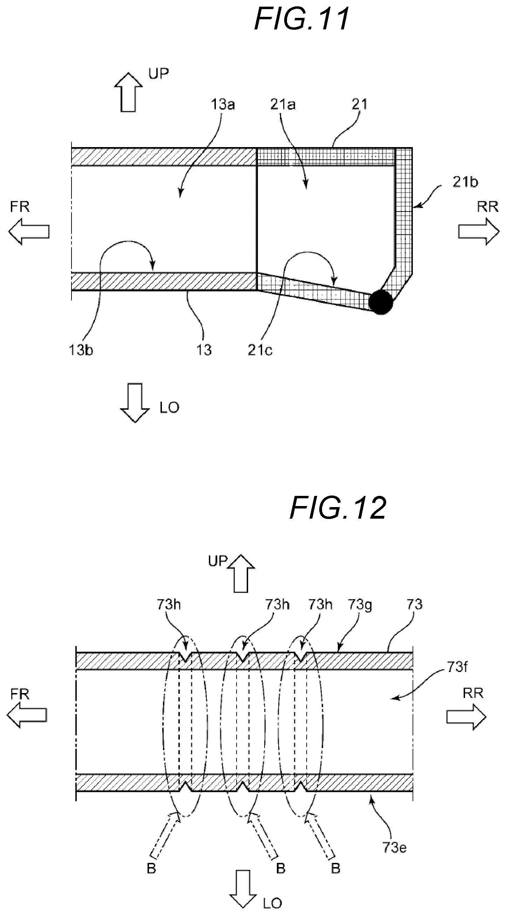

A vehicle front part structure according to a ninth embodiment will be described below with reference to FIG. 11. FIG. 11 illustrates an extracted part of inside of the vehicle front part structure. A part illustration of which is omitted in FIG. 11 is the same as in the above-described first embodiment. In addition, in FIG. 11, a part having the same configuration as in the above-described first embodiment is denoted by the same reference sign.

As illustrated in FIG. 11, in the present embodiment, an inner bottom surface 21c of a glove box 21 is tilted such that height decreases further on the rear side (vehicle cabin 1b side). A housing space 21a of the glove box 21 is connected to the communication space 13a of the communication portion 13 on the front side, and a lid 21b is attached an opening thereof on the rear side.

The vehicle front part structure according to the present embodiment has the same configuration as in the above-described first embodiment and other embodiments except that the inner bottom surface 21c of the glove box 21 is tilted, and thus can achieve the same effect as in the above-described first embodiment.

Moreover, in the vehicle front part structure according to the present embodiment, since the inner bottom surface 21c of the glove box 21 is tilted such that height decreases toward the rear side (vehicle cabin 1b side), a package to be kept in the housing space 21a of the glove box 21 can be prevented from moving from the communication portion 13 to the front trunk.

### [Tenth Embodiment]

A vehicle front part structure according to a tenth embodiment will be described below with reference to FIG. 12. FIG. 12 illustrates an extracted part of a communication portion 73 in the vehicle front part structure. A part illustration of which is omitted in FIG. 12 is the same as in the above-described first embodiment.

As illustrated in FIG. 11, the communication portion 73 of the present embodiment is provided with fragile portions (parts illustrated with arrows B) at a plurality of places (for example, three places). Specifically, the fragile portions are formed by providing thin-walled portions 73h at a bottom wall 73e, a sidewall 73f, and an upper wall 73g of the communication portion 73. The thin-walled portions 73h are continuously formed in a circumferential direction from the bottom wall 73e to the upper wall 73g through the sidewall 73f.

The fragile portions constituted by the thin-walled portions 73h have lower stiffness than the other part of the communication portion 73 and are easily deformed or broken when impact force is applied from the front side at front collision.

The vehicle front part structure according to the present embodiment has the same configuration as in the above-described first embodiment and other embodiments except that the fragile portions are formed at the communication portion 73, and thus can achieve the same effect as in the above-described first embodiment.

Moreover, in the vehicle front part structure according to the present embodiment, since part of the wall portions 73e to 73g of the communication portion 73 is formed with the fragile portions, the wall portions 73e to 73g of the communication portion 73 can be prevented from entering the vehicle cabin even when impact force is received from the front side at front collision. Specifically, since the fragile portions provided at the wall portions 73e to 73g are deformed and damaged at front collision, the wall portions 73e to 73g of the communication portion 73 can be prevented from entering the vehicle cabin 1b.

Note that, in the present embodiment, the fragile portions are formed by providing the thin-walled portions 73h at the wall portions 73e to 73g of the communication portion 73, but the fragile portions may be provided at the front trunk. Moreover, impact force at front collision can be absorbed by forming part or the entire of the wall portions in an accordion shape in sectional view instead of providing the thin-walled portions 73h to form the fragile portions.

### [Modifications]

In each of the above-described first to tenth embodiments, a connection counterpart of the communication portion 13, 33, 43, 53, 63, or 73 on the vehicle cabin 1b side is the glove box 11 or 21, but in the present invention, the connection counterpart of the communication portion on the vehicle cabin side is not limited thereto. A housing portion different from a glove box may be provided at an upper or lower part of the instrument panel, and the housing portion may be the connection counterpart of the communication portion. However, in this case, the housing portion needs to be provided with an openable and closable lid in terms of prevention of smell leakage, package slippage, and the like.

Moreover, in each of the above-described first to tenth embodiments, since the connection counterpart of the communication portion 13, 33, 43, 53, 63, or 73 on the vehicle cabin 1b side is the glove box 11 or 21, the vehicle cabin side housing portion is arranged at the front passenger seat side part 1d of the vehicle cabin 1b, but the present invention is not limited thereto. For example, the vehicle cabin side housing portion may be provided at a front side part of a steering wheel at the instrument panel, or the vehicle cabin side housing portion may be provided at a front side part between a driver seat and a front passenger seat.

Further, in the above-described first to tenth embodiments, one front trunk 12 is provided at the front part 1a of the vehicle 1, but in the present invention, a plurality of front trunks may be provided at the front part of the vehicle. In this case, at least one of the front trunks only needs to be connected to the vehicle cabin side housing portion through the communication portion.

### [Reference Signs List]

1 vehicle
1a front part
10 instrument panel
11, 21 glove box (vehicle cabin inner side housing portion)
12, 22, 32 front trunk
12c, 22c inner bottom surface
13, 33, 43, 53, 63 communication portion
13b, 33b, 43b, 53b inner bottom surface
13c bottom wall
21c inner bottom surface
22d bottom wall
32b opening
32d lid
32e rear wall
53c ridge portion
54 overlay member
54b upper surface
54c ridge portion
63c protruding portion

## Claims

1. A vehicle front part structure comprising:
a front trunk (12, 22, 32) disposed at a vehicle (1) front part (1a) on a front side of a vehicle cabin (1b) of a vehicle (1) and having a front housing space (12a, 22a, 32a) that can house a package;
**characterised by**
a vehicle cabin side housing portion (11, 21) disposed at a front part of the vehicle cabin (1b), comprising a vehicle cabin side housing space (11a, 21a) into and out of which a package can be taken from the vehicle cabin side, and provided with a lid (11b, 21b) that can open and close an opening of the vehicle cabin side housing space (11a, 21a) on the vehicle cabin side; and
a communication portion (13, 33, 43, 53, 63, 73) having a communication space (13a, 33a, 43a, 53a, 63a) providing communication between the front housing space (12a, 22a, 32a) and the vehicle cabin side housing space (11, 21).

2. The vehicle front part structure according to claim 1, wherein at least part of an inner bottom surface (22c) of the front trunk (22) is tilted such that its height gradually decreases toward a front side in a front-rear direction of the vehicle (1).

3. The vehicle front part structure according to claim 1 or **2,** wherein at least part of an inner bottom surface (33b) of the communication portion (33) is tilted such that its height gradually decreases toward a front side in a front-rear direction of the vehicle (1).

4. The vehicle front part structure according to claim 1 or **2,** wherein an inner bottom surface (43b) of the communication portion (43) is tilted such that its height gradually increases toward a front side in a front-rear direction of the vehicle (1).

5. The vehicle front part structure according to claim **1,** wherein
a front part region positioned at a front part in a region from a front end portion of an inner bottom surface (22c) of the front trunk (22) to a rear end portion of an inner bottom surface (43b) of the communication portion (43) is tilted such that its height gradually decreases toward the front end portion of the inner bottom surface (22c) of the front trunk (22), and
a rest region except for the front part region in the region from the front end portion of the inner bottom surface (22c) of the front trunk (22) to the rear end portion of the inner bottom surface (43b) of the communication portion (43) is tilted such that its height gradually decreases toward the rear end portion of the inner bottom surface (43b) of the communication portion (43).

6. The vehicle front part structure according to any one of the preceding claims, wherein at least a part, including a front side part, of an inner bottom surface (21c) of the vehicle cabin side housing portion (21) is tilted such that its height gradually decreases toward a rear side in a front-rear direction of the vehicle (1).

7. The vehicle front part structure according to any of the preceding claims, wherein the inner bottom surface (43b) of the communication portion (43) is tilted such that its height gradually increases from the rear side to the front side of the front trunk (22) in a front-rear direction of the vehicle (1) and/or the inner bottom surface (22c) of the front trunk (22) is tilted such that its height decreases further on the front side of the vehicle (1), so that the inner bottom surface (22c) of the front trunk (22) and the inner bottom surface (43b) of the communication portion (43) are angled relative to each other at their contact place.

8. The vehicle front part structure according to any one of the preceding claims, wherein part of a wall portion surrounding the front housing space of the front trunk (12, 22, 32) and a wall portion surrounding the communication space (13a, 33a, 43a, 53a, 63a) of the communication portion (73) includes a fragile portion, wherein the fragile portion is preferably provided by thin-walled portions (73h) at a bottom wall (73e), a sidewall (73f), and an upper wall (73g) of the communication portion (73), wherein preferably the fragile portion constituted by the thin-walled portions (73h) has lower stiffness than the other parts of the communication portion (73).

9. The vehicle front part structure according to any one of the preceding claims, wherein the front trunk (32) has an opening (32b) through which a package can be taken in and out and is provided with a lid (32d) that can open and close the opening (32b).

10. The vehicle front part structure according to any one of the preceding claims, wherein a rear wall (32e) of a wall portion surrounding the front housing space of the front trunk (32) is tilted to gradually lean from the upper side of the rear wall (32e) to the lower side of the rear wall (32e) in such a manner that the lower side is closer to the rear side in a front-rear direction of the vehicle (1).

11. The vehicle front part structure according to any one of the preceding claims, wherein an inner bottom surface (53b) of the communication portion (53) is provided with a plurality of protruding portions (53c) protruding upward as compared to the other part of the inner bottom surface (53b).

12. The vehicle front part structure according to claim 11, wherein the plurality of protruding portions (53c) are formed to extend in the front-rear direction of the vehicle (1) and are preferably separate from each other in the right-left direction of the vehicle (1).

13. The vehicle front part structure according to any one of claims 1 to 10, wherein an overlay member (54) is placed on the inner bottom surface (13b) of the communication portion (13), wherein the overlay member (54) is provided with a plurality of protruding portions (54c) on an upper surface (54b) as compared to the other part of the inner bottom surface.

14. The vehicle front part structure according to any one of the preceding claims, wherein the vehicle cabin side housing space (11, 21) is a glove box (11, 21) provided at an instrument panel.

15. A vehicle (1) comprising a vehicle front part structure (1a) according to any one of the preceding claims.

## Patentansprüche

1. Fahrzeugfrontteilstruktur, umfassend:
einen Frontkofferraum (12, 22, 32), der an einem Frontteil (1a) eines Fahrzeugs (1) an einer Frontseite einer Fahrzeugkabine (1b) eines Fahrzeugs (1) angebracht ist und einen Frontgehäuseraum (12a, 22a, 32a) aufweist, der ein Gepäckstück unterbringen kann;
**gekennzeichnet durch**
einen fahrzeugkabinenseitigen Gehäuseabschnitt (11, 21), der an einem Frontteil der Fahrzeugkabine (1b) angebracht ist, umfassend einen fahrzeugkabinenseitigen Gehäuseraum (11a, 21a), in den und aus dem ein Gepäckstück von der Fahrzeugkabinenseite entnommen werden kann, und das mit einem Deckel (11b, 21b) bereitgestellt ist, der eine Öffnung des fahrzeugkabinenseitigen Gehäuseraums (11a, 21a) auf der Fahrzeugkabinenseite öffnen und schließen kann; und
einen Kommunikationsabschnitt (13, 33, 43, 53, 63, 73), der einen Kommunikationsraum (13a, 33a, 43a, 53a, 63a) aufweist, der eine Kommunikation zwischen dem Frontgehäuseraum (12a, 22a, 32a) und dem fahrzeugkabinenseitigen Gehäuseraum (11, 21) bereitstellt.

2. Fahrzeugfrontteilstruktur nach Anspruch 1, wobei mindestens ein Teil einer inneren Bodenfläche (22c) des Frontkofferraums (22) so geneigt ist, dass dessen Höhe allmählich in Richtung einer Frontseite in einer Front-Heck-Richtung des Fahrzeugs (1) abnimmt.

3. Fahrzeugfrontteilstruktur nach Anspruch 1 oder 2, wobei mindestens ein Teil einer inneren Bodenfläche (33b) des Kommunikationsabschnitts (33) so geneigt ist, dass dessen Höhe allmählich in Richtung einer Frontseite in einer Front-Heck-Richtung des Fahrzeugs (1) abnimmt.

4. Fahrzeugfrontteilstruktur nach Anspruch 1 oder 2, wobei eine innere Bodenfläche (33b) des Kommunikationsabschnitts (33) so geneigt ist, dass dessen Höhe allmählich in Richtung einer Frontseite in einer Front-Heck-Richtung des Fahrzeugs (1) zunimmt.

5. Fahrzeugfrontteilstruktur nach Anspruch 1, wobei
ein Frontteilbereich, der an einem Frontteil in einem Bereich von einem Frontendabschnitt einer inneren Bodenfläche (22c) des Frontkofferraums (22) zu einem Heckendabschnitt einer inneren Bodenfläche (43b) des Kommunikationsabschnitts (43) positioniert ist, so geneigt ist, dass dessen Höhe allmählich in Richtung des Frontendabschnitts der inneren Bodenfläche (22c) des Frontkofferraums (22) abnimmt, und
ein Ruhebereich mit Ausnahme des Frontteilbereichs in dem Bereich von dem Frontendabschnitt der inneren Bodenfläche (22c) des Frontkofferraums (22) zu dem Heckendabschnitt der inneren Bodenfläche (43b) des Kommunikationsabschnitts (43) so geneigt ist, dass dessen Höhe allmählich in Richtung des Heckendabschnitts der inneren Bodenfläche (43b) des Kommunikationsabschnitts (43) abnimmt.

6. Fahrzeugfrontteilstruktur nach einem der vorhergehenden Ansprüche, wobei mindestens ein Teil, das ein Frontseitenteil beinhaltet, einer inneren Bodenfläche (21c) des fahrzeugkabinenseitigen Gehäuseabschnitts (21) so geneigt ist, dass dessen Höhe allmählich in Richtung einer Heckseite in einer Front-Heck-Richtung des Fahrzeugs (1) abnimmt.

7. Fahrzeugfrontteilstruktur nach einem der vorhergehenden Ansprüche, wobei die innere Bodenfläche (43b) des Kommunikationsabschnitts (43) so geneigt ist, dass dessen Höhe von der Heckseite zur Frontseite des Frontkofferraums (22) in einer Front-Heck-Richtung des Fahrzeugs (1) allmählich zunimmt und/oder die innere Bodenfläche (22c) des Frontkofferraums (22) so geneigt ist, dass dessen Höhe auf der Frontseite des Fahrzeugs (1) weiter abnimmt, so dass die innere Bodenfläche (22c) des Frontkofferraums (22) und die innere Bodenfläche (43b) des Kommunikationsabschnitts (43) an ihrer Kontaktstelle relativ zueinander abgewinkelt sind.

8. Fahrzeugfrontteilstruktur nach einem der vorhergehenden Ansprüche, wobei ein Teil eines Wandabschnitts, der den Frontgehäuseraum des Frontkofferraums (12, 22, 32) umgibt, und eines Wandabschnitts, der den Kommunikationsraum (13a, 33a, 43a, 53a, 63a) des Kommunikationsabschnitts (73) umgibt, einen zerbrechlichen Abschnitt beinhaltet, wobei der zerbrechliche Abschnitt bevorzugt durch dünnwandige Abschnitte (73h) an einer Bodenwand (73e), einer Seitenwand (73f) und einer oberen Wand (73g) des Kommunikationsabschnitts (73) bereitgestellt ist, wobei der zerbrechliche Abschnitt, der durch die dünnwandigen Abschnitte (73h) gebildet wird, bevorzugt eine geringere Steifigkeit als die anderen Teile des Kommunikationsabschnitts (73) aufweist.

9. Fahrzeugfrontteilstruktur nach einem der vorhergehenden Ansprüche, wobei der Frontkofferraum (32) eine Öffnung (32b) aufweist, durch die ein Gepäckstück hinein- und herausgenommen werden kann, und mit einem Deckel (32d) bereitgestellt ist, der die Öffnung (32b) öffnen und schließen kann.

10. Fahrzeugfrontteilstruktur nach einem der vorhergehenden Ansprüche, wobei eine Heckwand (32e) eines Wandabschnitts, der den Frontgehäuseraum des Frontkofferraums (32) umgibt, so geneigt ist, dass sie allmählich von der oberen Seite der Heckwand (32e) zur unteren Seite der Heckwand (32e) so geneigt ist, dass die untere Seite in einer Front-Heck-Richtung des Fahrzeugs (1) näher an der Heckseite liegt.

11. Fahrzeugfrontteilstruktur nach einem der vorhergehenden Ansprüche, wobei eine innere Bodenfläche (53b) des Kommunikationsabschnitts (53) mit einer Vielzahl von vorstehenden Abschnitten (53c) bereitgestellt ist, die im Vergleich zum anderen Teil der inneren Bodenfläche (53b) nach oben vorstehen.

12. Fahrzeugfrontteilstruktur nach Anspruch 11, wobei die Vielzahl von vorstehenden Abschnitten (53c) so ausgebildet sind, dass sie sich in der Front-Heck-Richtung des Fahrzeugs (1) erstrecken und bevorzugt in der Rechts-Links-Richtung des Fahrzeugs (1) voneinander getrennt sind.

13. Fahrzeugfrontteilstruktur nach einem der Ansprüche 1 bis 10, wobei ein Überlagerungselement (54) auf der inneren Bodenfläche (13b) des Kommunikationsabschnitts (13) platziert ist, wobei das Überlagerungselement (54) mit einer Vielzahl von vorstehenden Abschnitten (54c) auf einer oberen Fläche (54b) im Vergleich zu dem anderen Teil der inneren Bodenfläche bereitgestellt ist.

14. Fahrzeugfrontteilstruktur nach einem der vorhergehenden Ansprüche, wobei der fahrzeugkabinenseitige Gehäuseraum (11, 21) ein Handschuhfach (11, 21) ist, das an einem Armaturenbrett bereitgestellt ist.

15. Fahrzeug (1), umfassend die Fahrzeugfrontteilstruktur (1a) nach einem der vorhergehenden Ansprüche.

## Revendications

1. Structure de partie avant d'un véhicule, la structure comprenant :
un coffre avant (12, 22, 32) disposé au niveau d'une partie avant (1a) d'un véhicule (1) sur un côté avant d'un habitacle (1b) du véhicule (1), et comportant un espace de logement avant (12a, 22a, 32a) pouvant loger un paquet ;
**caractérisée par**
une portion de logement latérale (11, 21) d'habitacle de véhicule disposée au niveau d'une partie avant de l'habitacle (1b) du véhicule, comprenant un espace de logement latéral (11a, 21a) d'habitacle de véhicule dans lequel un paquet peut être introduit et à partir duquel il peut être retiré du côté de l'habitacle du véhicule, et étant munie d'un couvercle (11b, 21b) pouvant ouvrir et fermer une ouverture de l'espace de logement latéral (11a, 21a) de l'habitacle du véhicule sur le côté de l'habitacle du véhicule ; et
une portion de communication (13, 33, 43, 53, 63, 73) comportant un espace de communication (13a, 33a, 43a, 53a, 63a) permettant une communication entre l'espace de logement avant (12a, 22a, 32a) et l'espace de logement latéral (11, 21) de l'habitacle du véhicule.

2. La structure de partie avant d'un véhicule selon la revendication 1, dans laquelle au moins une partie d'une surface inférieure interne (22c) du coffre avant (22) est inclinée de telle façon que sa hauteur diminue progressivement vers un côté avant dans un sens avant-arrière du véhicule (1).

3. La structure de partie avant d'un véhicule selon les revendications 1 ou 2, dans laquelle au moins une partie d'une surface inférieure interne (33b) de la portion de communication (33) est inclinée de telle façon que sa hauteur diminue progressivement vers un côté avant dans un sens avant-arrière du véhicule (1).

4. La structure de partie avant d'un véhicule selon les revendications 1 ou 2, dans laquelle une surface inférieure interne (43b) de la portion de communication (43) est inclinée de telle façon que sa hauteur augmente progressivement vers un côté avant dans un sens avant-arrière du véhicule (1).

5. La structure de partie avant d'un véhicule selon la revendication 1, dans laquelle
une région de partie avant, positionnée au niveau d'une partie avant dans une région allant d'une portion d'extrémité avant d'une surface inférieure interne (22c) du coffre avant (22) à une portion d'extrémité arrière d'une surface inférieure interne (43b) de la portion de communication (43), est inclinée de telle façon que sa hauteur diminue progressivement vers la portion d'extrémité avant de la surface inférieure interne (22c) du coffre avant (22), et
une région d'appui, à l'exception de la région de partie avant dans la région allant de la portion d'extrémité avant de la surface inférieure interne (22c) du coffre avant (22) à la portion d'extrémité arrière de la surface inférieure interne (43b) de la portion de communication (43), est inclinée de telle façon que sa hauteur diminue progressivement vers la portion d'extrémité arrière de la surface inférieure interne (43b) de la portion de communication (43).

6. La structure de partie avant d'un véhicule selon l'une quelconque des revendications précédentes, dans laquelle au moins une partie, y compris une partie latérale avant, d'une surface inférieure interne (21c) de la portion de logement latérale (21) de l'habitacle du véhicule est inclinée de telle façon que sa hauteur diminue progressivement vers un côté arrière dans un sens avant-arrière du véhicule (1).

7. La structure de partie avant d'un véhicule selon l'une quelconque des revendications précédentes, dans laquelle la surface inférieure interne (43b) de la portion de communication (43) est inclinée de telle façon que sa hauteur augmente progressivement du côté arrière au côté avant du coffre avant (22) dans un sens avant-arrière du véhicule (1), et/ou la surface inférieure interne (22c) du coffre avant (22) est inclinée de telle façon que sa hauteur diminue davantage sur le côté avant du véhicule (1), de sorte que la surface inférieure interne (22c) du coffre avant (22) et la surface inférieure interne (43b) de la portion de communication (43) soient en biais l'une par rapport à l'autre au niveau de leur emplacement de contact.

8. La structure de partie avant d'un véhicule selon l'une quelconque des revendications précédentes, dans laquelle une partie d'une portion de paroi entourant l'espace de logement avant du coffre avant (12, 22, 32), et une portion de paroi entourant l'espace de communication (13a, 33a, 43a, 53a, 63a) de la portion de communication (73), comprennent une portion fragile, dans laquelle la portion fragile est fournie de préférence par des portions à paroi mince (73h) au niveau d'une paroi inférieure (73e), d'une paroi latérale (73f) et d'une paroi supérieure (73g) de la portion de communication (73), et dans laquelle, de préférence, la portion fragile constituée par les portions à paroi mince (73h) présente une rigidité inférieure à celle des autres parties de la portion de communication (73).

9. La structure de partie avant d'un véhicule selon l'une quelconque des revendications précédentes, dans laquelle le coffre avant (32) comporte une ouverture (32b) à travers laquelle un paquet peut être introduit et retiré, et est muni d'un couvercle (32d) pouvant ouvrir et fermer l'ouverture (32b).

10. La structure de partie avant d'un véhicule selon l'une quelconque des revendications précédentes, dans laquelle une paroi arrière (32e) d'une portion de paroi entourant l'espace de logement avant du coffre avant (32) est inclinée de façon à se pencher progressivement à partir du côté supérieur de la paroi arrière (32e) vers le côté inférieur de la paroi arrière (32e), de telle manière que le côté inférieur soit plus proche du côté latérale dans un sens avant-arrière du véhicule (1).

11. La structure de partie avant d'un véhicule selon l'une quelconque des revendications précédentes, dans laquelle une surface inférieure interne (53b) de la portion de communication (53) est munie de plusieurs portions saillantes (53c) faisant saillie vers le haut, par rapport à l'autre partie de la surface inférieure interne (53b).

12. La structure de partie avant d'un véhicule selon la revendication 11, dans laquelle les plusieurs portions saillantes (53c) sont formées de façon à s'étendre dans le sens avant-arrière du véhicule (1), et sont de préférence séparées les unes des autres dans le sens droite-gauche du véhicule (1).

13. La structure de partie avant d'un véhicule selon l'une quelconque des revendications 1 à 10, dans laquelle un élément de recouvrement (54) est placé sur la surface inférieure interne (13b) de la portion de communication (13), l'élément de recouvrement (54) étant muni d'une pluralité de portions saillantes (54c) sur une surface supérieure (54b), par rapport à l'autre partie de la surface inférieure interne.

14. La structure de partie avant d'un véhicule selon l'une quelconque des revendications précédentes, dans laquelle l'espace de logement latéral (11, 21) de l'habitacle du véhicule est une boîte à gants (11, 21) disposée au niveau d'un tableau de bord.

15. Véhicule (1) comprenant une structure de partie avant (1a) du véhicule selon l'une quelconque des revendications précédentes.
